# DEMANDE DE BREVET EUROPEEN

(11) **EP 0 906 937 A1**
(43) Date de publication de la demande: **07.04.1999**
(21) Numéro de dépôt: 98402420.8
(22) Date de dépôt: 01.10.1998
(51) Int. Cl.: C08L 51/00, C08F 291/00, C08F 291/18, C08F 4/36

(54) **Copolymère greffé par polymérisation radicalaire en présence de radicaux stables, sa préparation et ses applications**

(30) Priorité: 03.10.1997 FR 9712341
(71) Demandeur: ELF ATOCHEM S.A., 92800 Puteaux, Hauts-de-Seine (FR)
(72) Inventeur: Bertin, Denis, 76970 Motteville (FR); Boutevin, Bernard, 34090 Montpellier (FR); Robin, Jean-Jacques, 34830 Clapiers (FR)
(74) Mandataire: Chaillot, Geneviève

(57) **Abrégé**

La présente invention porte sur un copolymère greffé portant des greffons de formule -O-PM₁-(PM₂)-T, où PM₁ représente une séquence polymère issue d'au moins un monomère M₁ (co)polymérisable par voie radicalaire; PM₂, éventuellement présent, représente une séquence polymère issue d'au moins un monomère M₂ (co)polymérisable par voie radicalaire; et T représente le reste d'un radical stable T°. Pour préparer le copolymère, on conduit une polymérisation radicalaire par voie thermique d'au moins un monomère M₁ copolymérisable par voie radicalaire à l'aide d'au moins un macroamorceur de la formule (IV), et en présence d'au moins un radical stable T°, pour obtenir un copolymère greffé par des greffons de formule O-PM₁-T, et, le cas échéant, on ajoute au milieu au moins un monomère M₂ copolymérisable par voie radicalaire et on poursuit la (co)polymérisation pour obtenir un copolymère greffé par des greffons de formule -O-PM₁-PM₂-T. 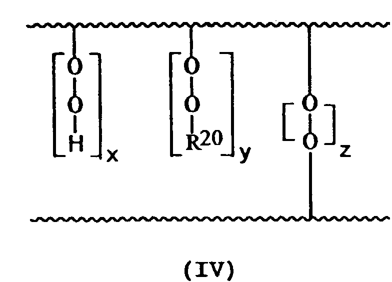 R²⁰ = H ou radical hydrocarboné; x, y et z représentent chacun le pourcentage de fonctions respectivement -[O-O-H], -[O-O-R²⁰] ou -[O-O]-, chacun d'eux pouvant varier de 0 à 100%, les fonctions -O-O- étant attachées à la chaîne de (co)polymère tronc directement ou par l'intermédiaire de groupements de liaison, ces derniers étant alors considérés comme entrant dans la définition du (co)polymère tronc.

## Description

La présente invention concerne la polymérisation radicalaire de monomères polymérisables par cette voie en présence d'un radical stable et d'un macroamorceur à fonctions réactives latérales en vue de synthétiser des copolymères greffés avec un contrôle sur le nombre de greffons et la longueur de ceux-ci.

Dans la demande de brevet européen EP-A-0 135 280, on décrit la synthèse de polymères greffés. Cependant, les voies préconisées concernent toujours l'arrachement d'un proton sur une chaîne de polymère par un radical libre. Cette technique ne permet pas de contrôler efficacement le nombre de radicaux créés, donc le nombre de greffons sur la chaîne de polymère.

La Société déposante a recherché une technique capable de mener à davantage de greffons, moins longs, que la technique connue conduisant à peu de greffons, plus longs. L'originalité de l'invention consiste, comme indiqué ci-dessus, en l'utilisation d'un macroamorceur à fonctions peroxydes latérales dans une polymérisation radicalaire en présence de radicaux stables, en vue de la synthèse de copolymères greffés avec deux principaux contrôles. Le premier est sur l'introduction des groupements peroxydes latéraux, où l'on peut quantitativement former le nombre de fonctions réactives, ce qui permet de choisir le nombre de greffons sur le polymère tronc pour obtenir un greffage plus ou moins dense. Le deuxième contrôle est sur l'architecture de ces greffons. Par la présence de radicaux stables (de type nitroxyle), la répartition massique des greffons est très bien contrôlée et ceux-ci peuvent être considérés de longueur quasi-identique ; les radicaux stables permettent d'avoir des indices de polymolécularité inférieurs en général à 1,5. Cette caractéristique donne de nouvelles propriétés aux copolymères obtenus, lesquels sont nouveaux. De plus, par ce contrôle des extrémités de chaîne, la synthèse de copolymères greffés avec des greffons de type copolymère à blocs est envisageable et réalisable. Cette structure donne des propriétés encore différentes par rapport aux copolymères greffés connus.

Le système proposé apporte donc un contrôle de la polymérisation, lequel s'effectue à la fois sur les longueurs de greffons - les longueurs des greffons étant sensiblement identiques - et sur les extrémités de chaîne - ce qui permet de former des copolymères à blocs sur les greffons.

La présente invention a donc d'abord pour objet un copolymère greffé formé d'un (co)polymère tronc portant des greffons de formule (I) :

-O-PM₁-(PM₂)-T (I)

dans laquelle :
- PM₁ représente une séquence polymère issue d'au moins un monomère M₁ (co)polymérisable par voie radicalaire ;
- PM₂, éventuellement présent, représente une séquence polymère issue d'au moins un monomère M₂ (co)polymérisable par voie radicalaire ; et
- T représente le reste d'un radical stable T°.

Les monomères M₁ et M₂ sont notamment choisis parmi les monomères vinyliques, allyliques, vinylidéniques, diéniques et oléfiniques.

Par monomères vinyliques, on entend les (méth)acrylates, les monomères vinylaromatiques, les esters vinyliques, les éthers vinyliques, le (méth)acrylonitrile, le (méth)acrylamide et les mono- et di-(alkyl en C₁-C₁₈)-(méth)acrylamides, et les monoesters et diesters de l'anhydride maléique et de l'acide maléique.
· Les (méth)acrylates sont en particulier ceux des formules respectivement : 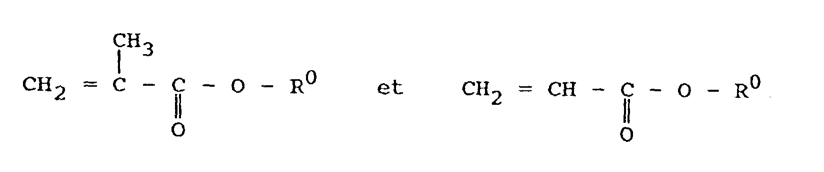 dans lesquelles R⁰ est choisi parmi les radicaux alkyle en C₁-C₁₈, linéaires ou ramifiés, primaires, secondaires ou tertiaires, cycloalkyle en C₅-C₁₈, (alcoxy en C₁-C₁₈)-alkyle en C₁-C₁₈, (alkylthio en C₁-C₁₈)-alkyle en C₁-C₁₈, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ; et les (méth)acrylates de glycidyle, de norbornyle, d'isobornyle.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.
· Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.
· Comme esters vinyliques, on peut citer l'acétate de vinyle, le propionate de vinyle, le chlorure de vinyle et le fluorure de vinyle, et comme éthers vinyliques, on peut citer le vinyl méthyl éther et le vinyl éthyl éther.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl) -2-norbornène, le 5-(5-hexényl) -2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Comme monomères oléfiniques, on peut citer l'éthylène, le butène, l'hexène et le 1-octène. Les monomères oléfiniques fluorés peuvent également être cités.

La présente invention fait intervenir un radical libre stable. Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié à une chaîne de polymère par une liaison covalente issue d'une réaction de couplage entre un radical centré sur un atome d'oxygène et un radical centré sur un atome de carbone. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

La famille des radicaux libre stables inclut les composés agissant comme inhibiteurs de polymérisation radicalaire, les radicaux nitroxydes stables c'est-à-dire comprenant le groupement =N-O·.

Ainsi, le reste T est celui représenté par la formule (IIa) ou (IIb) : 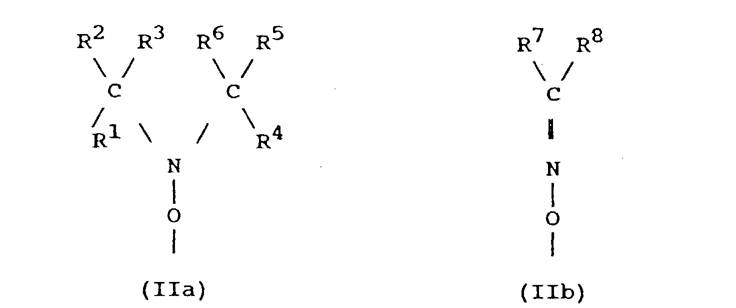 issu des radicaux stables respectivement (IIIa) et (IIIb) : 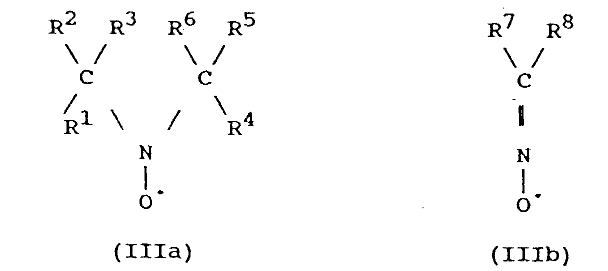 dans lesquels :
- R¹, R², R³, R⁴, R⁵, R⁶, R⁷ et R⁸, identiques ou différents, représentent chacun :
   · un atome d'halogène, tel que le chlore, le brome ou l'iode ;
   · un groupement hydrocarboné linéaire, ramifié ou cyclique, saturé ou insaturé, tel qu'un radical alkyle ou phényle ;
   · un groupement ester -COOR⁹ ou un groupement alcoxyle -OR¹⁰ ou un groupement phosphonate -PO(OR¹¹)₂ où R⁹, R¹⁰ et les R¹¹ représentent chacun indépendamment un groupement hydrocarboné linéaire, ramifié ou cyclique, saturé ou insaturé ;
   · une chaîne de polymère pouvant être par exemple une chaîne de poly(méthacrylate de méthyle), de polybutadiène, de polyoléfine comme de polyéthylène ou de polypropylène mais étant, de préférence, une chaîne de polystyrène,
   R³ et R⁶ pouvant être reliés entre eux pour former un groupement 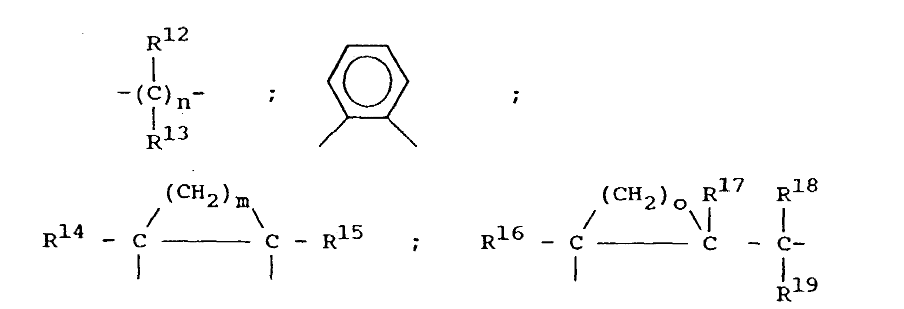 où R¹², R¹³, R¹⁴, R¹⁵, R¹⁶, R¹⁷, R¹⁸ et R¹⁹ représentent chacun indépendamment un atome d'hydrogène, OH, -COOH, -PO(OH)₂, -SO₃H ou ont une signification choisie parmi celles envisagées ci-dessus pour R¹ à R⁸ ;
- n vaut 2 ou 3, les R¹² et les R¹³ portés par les différents atomes de carbone pouvant être identiques ou différents ;
- m et o représentent chacun un entier de 1 à 10.

On peut en particulier citer :
- le 2, 2, 5, 5-tétraméthyl-1-pyrrolidinyloxy, commercialisé sous la dénomination "PROXYL" ;
- le 2, 2, 6, 6-tétraméthyl-1-pipéridinyloxy, commercialisé sous la dénomination "TEMPO" ;
- le N-tertiobutyl-1-phényl-2-méthyl propyl nitroxyde ;
- le N-tertiobutyl-1-(2-naphtyl)-2-méthyl propyl nitroxyde ;
- le N-tertiobutyl-1-diéthylphosphono-2,2-diméthyl propyl nitroxyde ;
- le N-tertiobutyl-1-dibenzylphosphono 2,2-diméthyl propyl nitroxyde,
- le N-phényl-1-diethylphosphono-2,2-diméthyl propyl nitroxyde ;
- le N-(1-phényl 2-méthyl propyl)-1 diéthylphosphono-1-méthyl éthyl nitroxyde.

Le (co)polymère tronc du copolymère greffé selon la présente invention est en particulier une chaîne d'un (co)polymère portant des fonctions peroxydes -O-O- à raison notamment de 10⁻³ à 10⁻⁷ mole par gramme de (co)polymère tronc et pouvant être représenté par la formule (IV) : 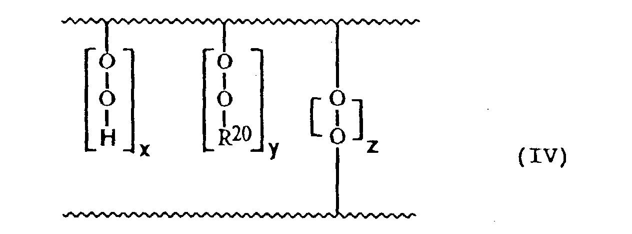 dans laquelle :
- R²⁰ représente un atome d'hydrogène ou un radical hydrocarboné, linéaire ou ramifié ; et
- x, y et z représentent chacun le pourcentage de fonctions respectivement -[O-O-H], -[O-O-R²⁰] ou -[O-O]-, chacun d'eux pouvant varier de 0 à 100%,
les fonctions -O-O- étant attachées à la chaîne de (co)polymère tronc directement ou par l'intermédiaire de groupements de liaison, ces derniers étant alors considérés comme entrant dans la définition du (co)polymère tronc.

Le (co)polymère portant des fonctions peroxyde -O-O- est notamment
(1) un (co)polymère dans lequel des fonctions peroxyde latérales ont été introduites par une source ionisante (bombardement électronique, rayons gamma, traitement plasma), puis par action de l'oxygène sur les radicaux ainsi préparés, ou par action conjuguée de l'ozone et de l'oxygène, ou par effet corona, et qui peut être choisi parmi les polyoléfines, le poly(chlorure de vinyle), le poly(fluorure de vinylidène), les copolymères éthylène-acétate de vinyle, ou
(2) un copolymère d'au moins un monomère M choisi parmi les monomères vinyliques, allyliques, vinylidéniques, diéniques et oléfiniques, avec au moins un comonomère portant une fonction peroxyde.
   · La préparation des (co)polymères de la famille (1) ci-dessus est décrite, entre autres, dans les documents brevets FR-A-2 569 416 et EP-A-0 704 465. Selon cette voie, on utilise directement un (co)polymère de masse moléculaire moyenne en nombre connue et on crée des fonctions peroxydes (ou hydroperoxydes) latérales sur ce (co)polymère par l'un des moyens indiqués ci-dessus. Avec ces méthodes de synthèse, le contrôle du nombre de groupements peroxydes introduits par chaîne de polymère est aisé, car il suffit de régler les paramètres temps d'irradiation et température.
   · La préparation de copolymères de la famille (2) ci-dessus est décrite entre autres dans US-A-5 179 160 et EP-A-0 506 006 : elle consiste à utiliser un monomère fonctionnalisé par une fonction peroxyde et à le copolymériser avec au moins un autre monomère polymérisable M, choisi dans les familles indiquées ci-dessus pour M₁ et M₂.

Comme comonomères portant une fonction peroxyde, on peut citer ceux des formules (Va) et (Vb) : 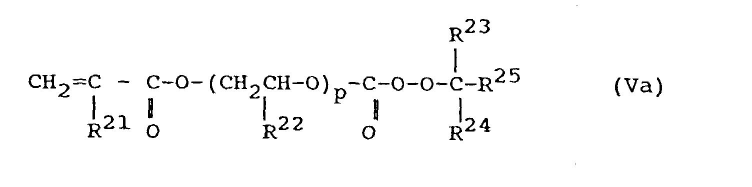 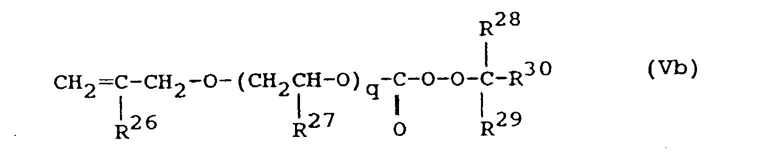 dans lesquelles :
- R²¹ est un atome d'hydrogène ou un groupe alkyle en C₁-C₂ ;
- R²² et R²⁷ représentent chacun un atome d'hydrogène ou un groupe méthyle ;
- R²⁶ représente un atome d'hydrogène ou un groupe alkyle en C₁-C₄ ;
- R²³, R²⁴, R²⁸ et R²⁹ représentent chacun un groupe alkyle en C₁-C₄ ;
- R²⁵ et R³⁰ représentent chacun un groupe alkyle en C₁-C₁₂, un groupe phényle, un groupe phényle substitué par alkyle ou un groupe cycloalkyle en C₃-C₁₂ ;
- p vaut 1 ou 2 ; et
- q vaut 0, 1 ou 2.

Des exemples de peroxydes organiques de formule (Va) :
- le carbonate de t-butylperoxyacryloyloxyéthyle;
- le carbonate de t-amylperoxyacryloyloxyéthyle;
- le carbonate de t-hexylperoxyacryloyloxyéthyle ;
- le carbonate de 1,1,3,3-tétraméthylbutyl peroxyacryloyloxyéthyle ;
- le carbonate de cumylperoxyacryloyloxyéthyle ;
- le carbonate de p-isopropylperoxyacryloyloxyéthyle;
- le carbonate de t-butylperoxyméthacryloxyloxyéthyle ;
- le carbonate de t-amylperoxyméthacryloyloxyéthyle ;
- le carbonate de 1,1,3,3-tétraméthylbutylperoxyméthacryloyloxyéthyle ;
- le carbonate de cumylperoxyméthacryloyloxyéthyle ;
- le carbonate de p-isopropylperoxyméthacryloyloxyéthyle ;
- le carbonate de t-butylperoxyacryloyloxyéthoxyéthyle ;
- le carbonate de t-amylperoxyacryloyloxyéthoxyéthyle ;
- le carbonate de t-hexyl peroxyacryloyloxyéthoxyéthyle ;
- le carbonate de 1,1,3,3-tétraméthylbutylperoxyacryloyloxyéthoxyéthyle ;
- le carbonate de cumylperoxyacryloyloxyéthoxyéthyle ;
- le carbonate de p-isopropylperoxyacryloyloxy éthoxyéthyle ;
- le carbonate de t-butylperoxyméthacryloyloxyéthoxyéthyle ;
- le carbonate de t-amylperoxyméthacryloyloxyéthoxyéthyle ;
- le carbonate de t-hexylperoxyméthacryloyloxyéthoxyéthyle ;
- le carbonate de 1,1,3,3-tétraméthylbutylperoxyméthacryloyloxyéthoxyéthyle ;
- le carbonate de cumylperoxyméthacryloyloxyéthoxyéthyle ;
- le carbonate de p-isopropylperoxyméthacryloyloxyéthoxyéthyle ;
- le carbonate de t-butylperoxyacryloyloxyisopropyle;
- le carbonate de t-amylperoxyméthacryloyloxyisopropyle ;
- le carbonate de t-hexylperoxyacryloyloxyisopropyle;
- le carbonate de 1,1,3,3-tétraméthylbutylperoxyacryloyloxyisopropyle ;
- le carbonate de cumylperoxyacryloyloxyisopropyle ;
- le carbonate de p-isopropylperoxyacryloyloxyisopropyle ;
- le carbonate de t-amylperoxyméthacryloyloxyisopropyle;
- le carbonate de t-hexylperoxyméthacryloyloxyisopropyle ;
- le carbonate de 1,1,3,3-tétraméthylbutylperoxymethacryloyloxyisopropyle ;
- le carbonate de cumylperoxyméthacryloyloxyisopropyle ; et
- le carbonate de p-isopropylperoxyméthacryloyloxyisopropyle.

Des exemples de peroxydes de formule (b) sont :
- le carbonate de t-butylperoxyallyle ;
- le carbonate de t-amylperoxyallyle ;
- le carbonate de t-hexylperoxyallyle ;
- le carbonate de 1,1,3,3-tétraméthylbutylperoxyallyle ;
- le carbonate de p-menthaneperoxyallyle ;
- le carbonate de cumylperoxyallyle ;
- le carbonate de t-butyl-peroxyméthallyle ;
- le carbonate de t-amylperoxyméthallyle;
- le carbonate de t-hexylperoxyméthallyle ;
- le carbonate de 1,1,3,3-tétraméthylbutylperoxyméthallyle ;
- le carbonate de p-menthaneperoxyméthallyle ;
- le carbonate de cumylperoxyméthallyle ;
- le carbonate de t-butylperoxyallyloxyéthyle;
- le carbonate de t-amylperoxyallyloxyéthyle;
- le carbonate de t-butylperoxyméthallyloxyéthyle ;
- le carbonate de t-amylperoxyméthallyloxyéthyle ;
- le carbonate de t-hexylperoxyméthallyloxyéthyle ;
- le carbonate de t-butylperoxyallyloxyisopropyle;
- le carbonate de t-amylperoxyallyloxyisopropyle ;
- le carbonate de t-hexylperoxyallyloxyisopropyle ;
- le carbonate de t-butylperoxyméthallyloxyisopropyle ; et
- le carbonate de t-hexylperoxyméthallyloxyisopropyle.

Le copolymère greffé selon la présente invention a une masse moléculaire moyenne en nombre généralement comprise entre 1 000 et 10 000 000 g/mole ; conformément à une caractéristique intéressante de la présente invention, ses greffons ont une longueur sensiblement identique, comprise entre 500 et 5 000 000 g/mole ; de plus, son indice de polymolécularité est inférieur ou égal à 1,5.

La présente invention a également pour objet un procédé de fabrication d'un copolymère greffé tel que défini ci-dessus, caractérisé par le fait qu'on conduit une polymérisation radicalaire par voie thermique d'au moins un monomère M₁ copolymérisable par voie radicalaire à l'aide d'au moins un macroamorceur de la formule (IV) telle que définie ci-dessus, et en présence d'au moins un radical stable T°, pour obtenir un copolymère greffé par des greffons de formule (Ia) :

-O-PM₁-T (Ia)

dans laquelle PM₁ et T sont tels que définis ci-dessus, et, le cas échéant, on ajoute au milieu au moins un monomère M₂ copolymérisable par voie radicalaire et on poursuit la (co)polymérisation pour obtenir un copolymère greffé par des greffons de formule (Ib) :

-O-PM₁-PM₂-T (Ib)

dans laquelle PM₁, PM₂ et T sont tels que définis ci-dessus.

On peut donner, pour cette polymérisation, le schéma suivant (cas où les fonctions peroxydes sont les fonctions -O-O-R²⁰ et cas où PM₁ seul est présent) :

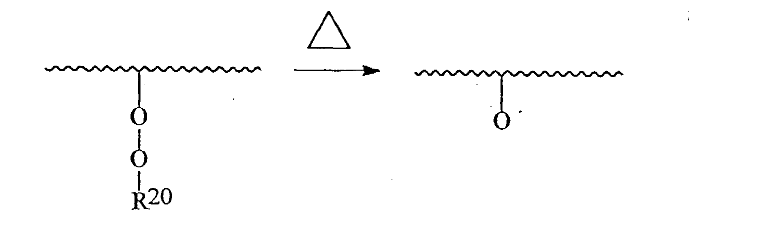

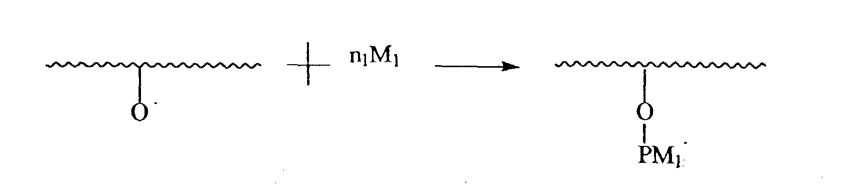

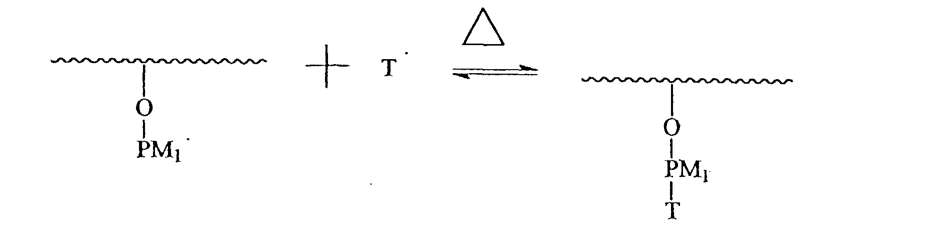

Le radical stable T° (en particulier le radical nitroxyle) - ou agent de piégeage des radicaux alkyle - conduit à un équilibre entre le macroradical et l'espèce dormante.

Les produits obtenus ont une longueur de chaîne pour les greffons quasi identique, puisque les radicaux nitroxyle contrôlent les macroradicaux en croissance et permettent d'éliminer les réactions de terminaison par recombinaison ou dismutation. Ces caractéristiques permettent d'éliminer la présence de réactions de réticulation (issues des réactions de terminaison par recombinaison). De plus, comme les radicaux nitroxyle contrôlent les extrémités de chaînes, l'obtention de copolymères à blocs sur les greffons est réalisable, comme le montre le schéma ci-dessous :

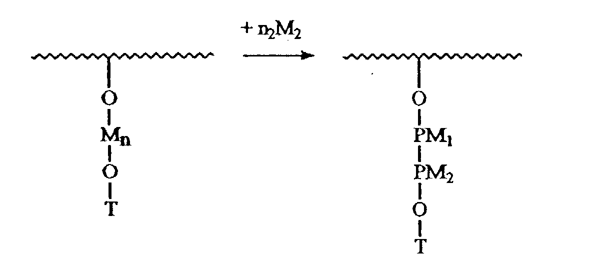

On utilise en particulier un macroamorceur (IV) de masse moléculaire moyenne en nombre comprise entre 1 000 et 10 000 000 g/mole.

Le radical stable est introduit notamment à raison de 0,001% à 30% en masse sur la base de la masse de polymère tronc (macroamorceur).

On conduit la (co)polymérisation ou chaque étape de polymérisation à une température généralement comprise entre 50 et 250°C, généralement en l'absence de solvant. Cependant, il est possible de travailler dans un solvant ou un mélange de solvants tels que le xylène, le chlorobenzène, le dichlorobenzène.

La présente invention a enfin pour objet l'utilisation d'un copolymère greffé tel que défini ci-dessus ou préparé par le procédé tel que défini ci-dessus en tant qu'agent de compatibilisation, agent émulsifiant ou primaire d'adhésion.

Les Exemples suivants illustrent la présente invention sans toutefois en limiter la portée.

### Exemple 1 : Synthèse d'un macroamorceur polyéthylène à fonctions peroxydes latérales

50 g de polyéthylène basse densité de masse moléculaire moyenne en nombre de 10 000 g/mole sont placés dans un réacteur à double enveloppe d'un diamètre utile de 40 mm. Le générateur d'ozone est un générateur de marque TRAILIGAZ. Le réacteur à lit fluidisé est placé sous contrôle thermique à 40°C ± 2°C, puis est irradié par un courant de mélange air/ozone (débit de 700 1/h, puissance du générateur d'ozone de 350 W/h, temps 1h : soit 17 g d'ozone généré). Après ce traitement, le milieu réactionnel est placé sous courant d'air pour éliminer l'ozone résiduel.

Le dosage des groupements peroxydes est ensuite réalisé par la méthode iodométrique. Le taux de peroxyde mesuré est de 10⁻⁵ mole par gramme de polymère.

### Exemple 2 : Synthèse d'un copolymère polyéthylène greffé polystyrène

1 g de polyéthylène ozonisé selon l'Exemple 1, 10 g de styrène et 0,016 g de 2,2,6,6-tétraméthyl-1-pipéridinyloxy ("TEMPO"), sont pesés dans un réacteur en verre bicol de 50 ml, surmonté d'un réfrigérant. Le réacteur est porté à 125°C pendant 20 heures. A 125°C, le mélange réactionnel est homogène.

### Purification du mélange réactionnel :

Au bout des 20 heures de réaction, le brut réactionnel est refroidi à température ambiante et est placé dans 100 ml de xylène. Cette première étape permet d'éliminer l'homopolystyrène formé durant la réaction de greffage qui est soluble dans le xylène à froid. La partie insoluble est replacée dans 50 ml de xylène à 120°C (solution homogène) et est précipitée dans 500 ml d'acétone. Cette deuxième étape permet d'éliminer l'homopolystyrène résiduel (soluble dans l'acétone) et de récupérer le polyéthylène greffé polystyrène, lequel précipite dans l'acétone. Plusieurs cycles de solubilisation-précipitation (xylène/acétone) sont effectués sur le précipité obtenu à chaque cycle. Le nombre de cycles nécessaires est déterminé jusqu'à l'obtention d'une masse constante en précipité : au minimum trois cycles.

### Caractérisation des copolymères greffés :

La spectroscopie Infra-Rouge a été utilisée comme méthode d'analyse pour quantifier le taux massique de polystyrène contenu dans les copolymères à blocs synthétisés et purifiés. Le spectromètre IR-TF est de marque NICOLET référencé 510. L'analyse est réalisée sur des films obtenus par pressage à chaud (190°C, temps de 2 mn à 150 bars) de marque DARRAGON. A partir de courbes étalons obtenues à partir de mélanges PE/PS à taux de PS variable (de 20 à 95%), le dosage de PS dans le copolymère a été calculé. La courbe étalon représente le rapport des surfaces des pics IR-TF vibrant à (1450, 1463 et 1473 cm⁻¹) sur le pic vibrant à 1493 cm⁻¹ en fonction du pourcentage massique de PS.

### Résultats :

1 g d'homopolystyrène a été recueilli, 2 g de copolymère greffé purifié ont été récupérés avec un taux de polystyrène de 60% massique, ce qui, en considérant qu'il y a 10⁻⁵ mole de peroxyde par gramme de polyéthylène, donne des longueurs de chaîne de greffon de l'ordre de 150 000 g/mole pour un polymère tronc de 10 000 g/mole.

### Exemple 3 : Synthèse d'un copolymère polyéthylène greffé polystyrène

On procède comme pour l'Exemple 2, excepté que le mélange initial est composé de 1 g de polyéthylène ozonisé selon l'Exemple 1, 10 g de styrène et 0,0008 g de "TEMPO" (cf Exemple 2). Ensuite, le mode opératoire : synthèse, purification et caractérisation, est identique à celui de l'Exemple 2.

Après purification et caractérisation, 1,9 g d'homopolystyrène a été recueilli ainsi que 2,1 g de copolymère greffé. Le pourcentage de polystyrène dans le copolymère greffé est de 80%, ce qui représente des longueurs de greffon de l'ordre de 200 000 g/mole.

### Exemple 4 : Synthèse d'un copolymère polyéthylène greffé polystyrène avec un polymère tronc de haut poids moléculaire

On procède comme pour l'Exemple 2, excepté que le mélange initial est composé de 1 g de polyéthylène de basse densité de haut poids moléculaire (1,8 x 10⁶ g/mole) préalablement ozonisé, 10 g de styrène et 0,0008 g de "TEMPO" (cf Exemple 2). Ensuite, le mode opératoire : synthèse, purification et caractérisation, est identique à celui de l'Exemple 2.

Après purification et caractérisation, 2,5 g d'homopolystyrène ont été recueillis ainsi que 4,1 g de copolymère greffé. Le pourcentage de polystyrène dans le copolymère greffé est de 80%, ce qui représente des longueurs de greffon de l'ordre de 300 000 g/mole.

### Exemple 5 : Mise en évidence du caractère vivant de la copolymérisation de greffage

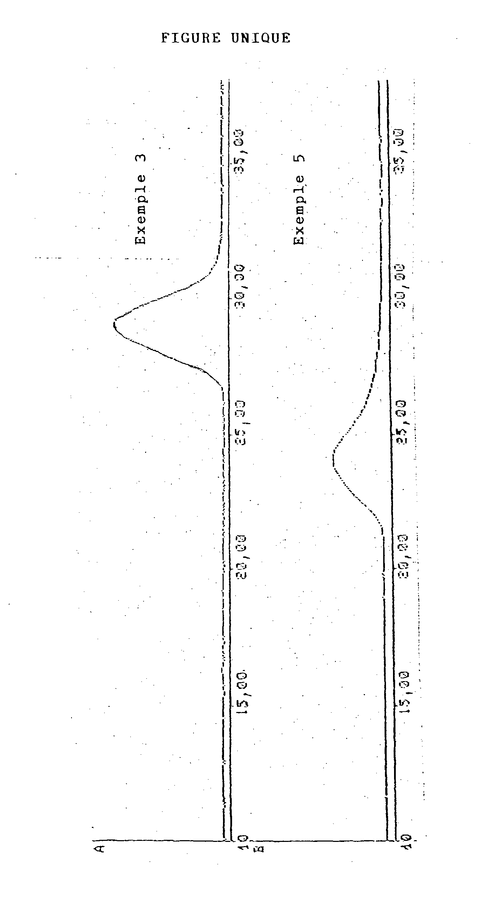

1 g de copolymère polyéthylène greffé polystyrène synthétisé en Exemple 3 est solubilisé à 125°C dans 10 g de styrène. Après 15 heures de réaction, le mélange réactionnel est complètement soluble dans le xylène à froid, alors que le copolymère de l'Exemple 3 est insoluble. L'augmentation des longueurs de chaîne des greffons est confirmé par une analyse chromatographie à perméation de gel (GPC) : l'appareillage utilisé est une pompe SPECTRA-PHYSICS SP8810 couplé à un détecteur à indice de réfraction de marque SHODEX RE61RI (l'éluant est THF, colonnes PL gel 5 *µ* 50A, 100A et styragel HR2). Les chromatogrammes GPC de la Figure 1 du dessin annexé montrent l'évolution de la taille des polymères : plus le temps d'élution est faible, plus la masse moléculaire moyenne en nombre est élevée.

Pour l'Exemple 3, le temps d'élution est de 29 min., et pour l'Exemple 5 le temps d'élution est de 24 min. Cette différence permet donc de prouver le caractère vivant de la copolymérisation de greffage.

### Exemple 6 : Application du copolymère greffé à un mélange polyéthylène/polystyrène comme agent compatibilisant

Un mélange initial polyéthylène/polystyrène (50/50 massique) est extrudé sur une extrudeuse bi-vis CLEXTRAL BC21 en présence ou non de copolymère greffé synthétisé dans l'Exemple 3. Les compounds en sortie d'extrudeuse sont ensuite caractérisés par le module d'Young et la contrainte à la rupture. Le Tableau 1 résume les résultats.

**Tableau 1:**

| Propriétés mécaniques des mélanges polyéthylène/polystyrène en présence d'agent de compatibilisation (B) ou non (A) | | | |
|---|---|---|---|
| Mélange | % copolymère greffé (masse) | Module E en N/mm² | Contrainte à la rupture en N/mm² |
| A | 0 | 600 | 5 |
| B | 5 | 850 | 9 |

Les tests pour les propriétés mécaniques sont réalisés sur des éprouvettes ISO 1 obtenues par compression. L'appareillage de mesure des propriétés mécaniques est de marque ZWICK référencé 1456 (traction ISO 527 1 et 2 (1993)).

### Exemple 7 (comparatif) : Essai de synthèse d'un copolymère de polyéthylène greffé polystyrène à partir de polyéthylène non ozonisé

On procède comme pour l'Exemple 2, excepté que le mélange initial est composé de 1 g de polyéthylène non ozonisé, 10 g de styrène et 0,0016 g de "TEMPO" (cf Exemple 2). Le mode opératoire est identique à celui l'Exemple 2.

Après purification et caractérisation, 0,8 g de polyéthylène a été recueilli, mais sans aucune présence de polystyrène (pas de greffage) et, en revanche, 4 g d'homopolystyrène ont été mis en évidence.

## Revendications

1. Copolymère greffé formé d'un (co)polymère tronc portant des greffons de formule (I) :
-O-PM₁-(PM₂)-T (I)
dans laquelle :
- PM₁ représente une séquence polymère issue d'au moins un monomère M₁ (co)polymérisable par voie radicalaire ;
- PM₂, éventuellement présent, représente une séquence polymère issue d'au moins un monomère M₂ (co)polymérisable par voie radicalaire ; et
- T représente le reste d'un radical stable T°.

2. Copolymère selon la revendication 1, caractérisé par le fait que les monomères M₁ et M₂ sont choisis parmi les monomères vinyliques, allyliques, vinylidéniques, diéniques et oléfiniques.

3. Copolymère selon l'une des revendications 1 et 2, caractérisé par le fait que le reste T est représenté par la formule (IIa) ou (IIb) : 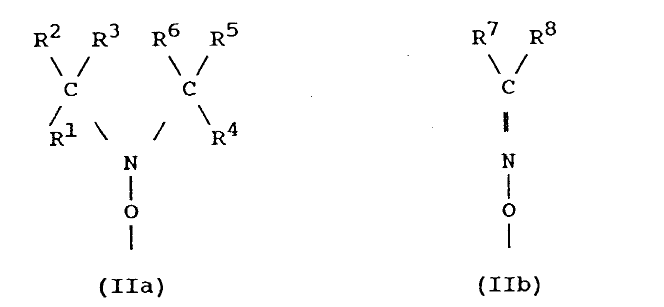 issu des radicaux stables respectivement (IIIa) et (IIIb) : 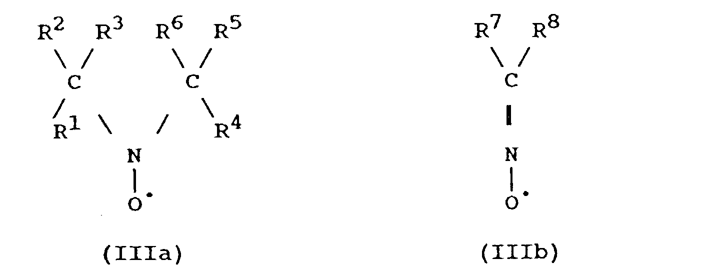 dans lesquels :
- R¹, R², R³, R⁴, R⁵, R⁶, R⁷ et R⁸, identiques ou différents, représentent chacun :
• un atome d'halogène, tel que le chlore, le brome ou l'iode ;
• un groupement hydrocarboné linéaire, ramifié ou cyclique, saturé ou insaturé, tel qu'un radical alkyle ou phényle ;
• un groupement ester -COOR⁹ ou un groupement alcoxyle -OR¹⁰ ou un groupement phosphonate -PO(OR¹¹)₂, où R⁹, R¹⁰ et les R¹¹ représentent chacun indépendamment un groupement hydrocarboné, linéaire, ramifié ou cyclique, saturé ou insaturé ;
• une chaîne de polymère pouvant être par exemple une chaîne de poly(méthacrylate de méthyle), de polybutadiène, de polyoléfine comme de polyéthylène ou de polypropylène mais étant, de préférence, une chaîne de polystyrène,
R³ et R⁶ pouvant être reliés entre eux pour former un groupement 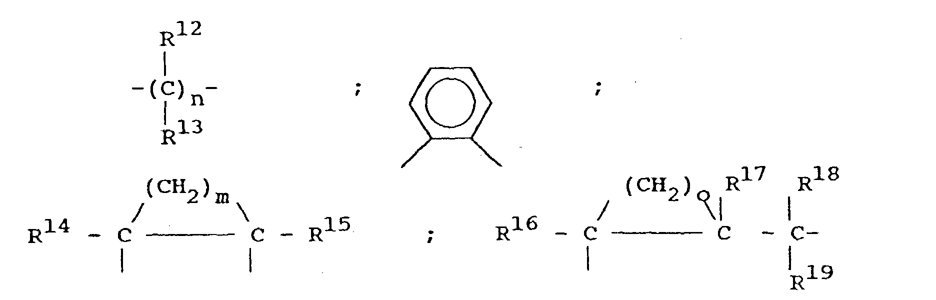 où R¹², R¹³, R¹⁴, R¹⁵, R¹⁶, R^{17,} R¹⁸ et R¹⁹ représentent chacun indépendamment un atome d'hydrogène, OH, -COOH, -PO(OH)₂, -SO₃H ou ont une signification choisie parmi celles envisagées ci-dessus pour R¹ à R⁸ ;
- n vaut 2 ou 3, les R¹² et les R¹³ portés par les différents atomes de carbone pouvant être identiques ou différents ;
- m et o représentent chacun un entier de 1 à 10.

4. Copolymère selon la revendication 3, caractérisé par le fait que le radical libre stable est choisi parmi :
- le 2,2,5,5-tétraméthyl-1-pyrrolidinyloxy ;
- le 2,2,6,6-tétraméthyl-1-pipéridinyloxy ;
- le N-tertiobutyl-1-phényl-2-méthyl propyl nitroxyde ;
- le N-tertiobutyl-1-(2-naphtyl)-2-méthyl propyl nitroxyde ;
- le N-tertiobutyl-1-diéthylphosphono-2,2-diméthyl propyl nitroxyde ;
- le N-tertiobutyl-1-dibenzylphosphono 2,2-diméthyl propyl nitroxyde,
- le N-phényl-1-diéthylphosphono-2,2-diméthyl propyl nitroxyde ;
- le N-(1-phényl 2-méthyl propyl)-1 diéthylphosphono-1-méthyl éthyl nitroxyde.

5. Copolymère greffé selon l'une des revendications 1 à 4, caractérisé par le fait que le (co)polymère tronc est une chaîne d'un (co)polymère portant des fonctions peroxydes -O-O- à raison notamment de 10⁻³ à 10⁻⁷ mole par gramme de (co)polymère tronc et pouvant être représenté par la formule (IV) : 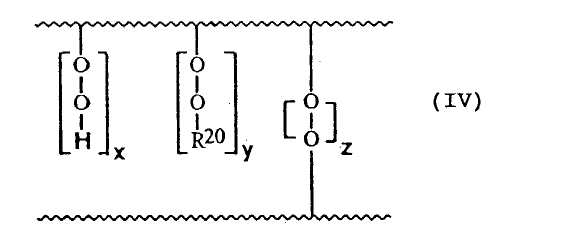 dans laquelle :
- R²⁰ représente un atome d'hydrogène ou un radical hydrocarboné, linéaire ou ramifié ; et
- x, y et z représentent chacun le pourcentage de fonctions respectivement -[O-O-H], -[O-O-R²⁰] ou -[O-O]-, chacun d'eux pouvant varier de 0 à 100%,
les fonctions -O-O- étant attachées à la chaîne de (co)polymère tronc directement ou par l'intermédiaire de groupements de liaison, ces derniers étant alors considérés comme entrant dans la définition du (co)polymère tronc.

6. Copolymère greffé selon la revendication 5, caractérisé par le fait que le (co)polymère portant des fonctions peroxydes -O-O-est
(1) un (co)polymère dans lequel des fonctions peroxyde latérales ont été introduites par une source ionisante, puis par action de l'oxygène sur les radicaux ainsi préparés, ou par action conjuguée de l'ozone et de l'oxygène, ou par effet corona, et qui peut être choisi parmi les polyoléfines, le poly(chlorure de vinyle), le poly(fluorure de vinylidène), les copolymères éthylène-acétate de vinyle, ou
(2) un copolymère d'au moins un monomère M choisi parmi les monomères vinyliques, vinylidéniques, diéniques et oléfiniques, avec au moins un comonomère portant une fonction peroxyde.

7. Copolymère greffé selon la revendication 6, caractérisé par le fait que le comonomère portant une fonction peroxyde est choisi parmi ceux des formules (Va) et (Vb) : 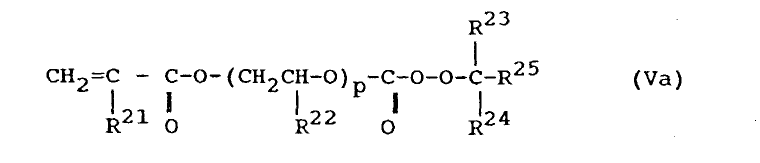 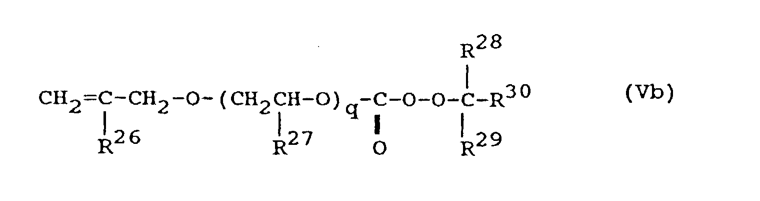 dans lesquelles :
- R²¹ est un atome d'hydrogène ou un groupe alkyle en C₁-C₂ ;
- R²² et R²⁷ représentent chacun un atome d'hydrogène ou un groupe méthyle ;
- R²⁶ représente un atome d'hydrogène ou un groupe alkyle en C₁-C₄ ;
- R²³, R²⁴, R²⁶ et R²⁹ représentent chacun un groupe alkyle en C₁-C₄ ;
- R²⁵ et R³⁰ représentent chacun un groupe alkyle en C₁-C₁₂, un groupe phényle, un groupe phényle substitué par alkyle ou un groupe cycloalkyle en C₃-C₁₂ ;
- p vaut 1 ou 2 ; et
- q vaut 0, 1 ou 2.

8. Copolymère greffé selon l'une des revendications 1 à 7, caractérisé par le fait que sa masse moléculaire moyenne en nombre est comprise entre 1000 et 10 000 000 g/mole.

9. Copolymère greffé selon l'une des revendications 1 à 8, caractérisé par le fait que les greffons ont une longueur sensiblement identique, comprise entre 500 et 5 000 000 g/mole.

10. Copolymère greffé selon l'une des revendications 1 à 9, caractérisé par le fait que son indice de polymolécularité est inférieur ou égal à 1,5.

11. Procédé de fabrication d'un copolymère greffé tel que défini à l'une des revendications 1 à 9, caractérisé par le fait qu'on conduit une polymérisation radicalaire par voie thermique d'au moins un monomère M₁ copolymérisable par voie radicalaire à l'aide d'au moins un macroamorceur de la formule (IV) telle que définie à la revendication 5, et en présence d'au moins un radical stable T°, pour obtenir un copolymère greffé par des greffons de formule (Ia) :
-O-PM₁-T (Ia)
dans laquelle PM₁ et T sont tels que définis à la revendication 1, et, le cas échéant, on ajoute au milieu au moins un monomère M₂ copolymérisable par voie radicalaire et on poursuit la (co)polymérisation pour obtenir un copolymère greffé par des greffons de formule (Ib) :
-O-PM₁-PM₂-T (Ib)
dans laquelle PM₁, PM₂ et T sont tels que définis à la revendication 1.

12. Procédé selon la revendication 11, caractérisé par le fait que l'on utilise un macroamorceur (IV) de masse moléculaire moyenne en nombre comprise entre 1 000 et 10 000 000 g/mole.

13. Procédé selon l'une des revendications 11 et 12, caractérisé par le fait qu'on introduit le radical stable à raison de 0,001% à 30% en masse sur la base de la masse du polymère tronc.

14. Procédé selon l'une des revendications 11 à 13, caractérisé par le fait qu'on conduit la polymérisation ou chaque étape de polymérisation à une température de 50 à 250°C.

15. Procédé selon l'une des revendications 11 à 14, caractérisé par le fait qu'on conduit la (co)polymérisation ou chaque étape de (co)polymérisation en l'absence de solvant.

16. Utilisation d'un copolymère greffé tel que défini à l'une des revendications 1 à 10 ou préparé par le procédé tel que défini à l'une des revendications 11 à 15, en tant qu'agent de compatibilisation, agent émulsifiant ou primaire d'adhésion.
